# NEUE EUROPÄISCHE PATENTSCHRIFT

(11) **EP 0 581 225 B2**
(45) Veröffentlichungstag und Bekanntmachung des Hinweises auf die Entscheidung über den Einspruch: **02.01.2003**
(45) Hinweis auf die Patenterteilung: 03.06.1998
(21) Anmeldenummer: 93111899.6
(22) Anmeldetag: 24.07.1993
(51) Int. Cl.: C08F 2/44, C08K 3/00

(54) **Suspension für die Herstellung gefüllter Giessharze**
Suspension for the production of filled cast resins
Suspression pour la production des résines coulables chargées

(30) Priorität: 31.07.1992 DE 4225309
(43) Veröffentlichungstag der Anmeldung: 02.02.1994
(73) Patentinhaber: Röhm GmbH & Co. KG, 64293 Darmstadt (DE)
(72) Erfinder: Ittmann, Günther, D-6114 Gross-Umstadt (DE); Krieg, Manfred, Dr., D-6100 Darmstadt (DE)

(56) Entgegenhaltungen:
- EP-A- 0 211 657
- EP-A- 0 218 866
- EP-A- 0 390 385
- WO-A-89/05310
- BE-A- 674 610
- DE-A- 4 040 602
- DATABASE WPI Week 7705, Derwent Publications Ltd., London, GB; AN 77-08258Y & JP-A-51 145 600 (MITSUBISHI EL.) 15. Dezember 1976

## Beschreibung

### Gebiet der Erfindung

Die Erfindung betrifft Suspensionen für die Herstellung gefüllter Gießharze, insbesondere auf Basis von (Meth)acrylsäureestern, die eine niedrige Viskosität sowie eine geringe Neigung zur Strukturviskosität beziehungsweise zur Sedimentation der Füllstoffteilchen aufweisen. Die aus den erfindungsgemäßen Gießharzen hergestellten Formkörper weisen ausgezeichnete Flammfestigkeit und Witterungsstabilität auf.

### Stand der Technik

Gefüllte Gießharze, insbesondere solche aus (Meth)acrylsäureestern, aus denen Formkörper mit hoher Flammfestigkeit und hoher Witterungsstabilität hergestellt werden können, sind bekannt.
In DE-PS 24 49 656 (= US-PS 4 221 697,4 251 576) werden beispielsweise stabile, fließfähige, formbare und härtbare Massen beschrieben, die aus einer polymerisierbaren, organischen Flüssigkeit und teilchenförmigen, anorganischen Füllstoffen bestehen, erhalten durch Dispergieren eines Füllstoffs in der polymerisierbaren Flüssigkeit, die ein polymeres Dispersionsmittel und gegebenenfalls ein niedermolekulares Bindemittel sowie weitere Polymerisatanteile enthält. Hierbei kann die Füllstoffkonzentration 20 bis 90 Vol.-% betragen, wobei als Füllstoffe Siliciumdioxid und Aluminiumoxid, als polymerisierbare Flüssigkeiten Acryl- oder Methacrylsäureester bevorzugt werden.

Die in EP-A 0 197 682 (= US-PS 3 847 865) angeführten Mischungen enthalten ungesättigte Urethane, Methylmethacrylat, Thermoplasten und gegebenenfalls Füllstoffe in Anteilen von 30 bis 70 Gew.-%. Als Füllstoffe können beispielsweise Siliciumdioxid, Calciumcarbonat, Talkum, Tonerden oder Aluminiumhydrat verwendet werden, wobei dann bevorzugt "Kupplungsagentien", wie beispielsweise Silane, eingesetzt werden, um den Füllstoff an die Polymermatrix zu binden.
EP-PS 0 218 866 (= US-PS 4 786 660) beschreibt ein Verfahren zur Herstellung von härtbaren Gießharzen mit hohen Anteilen an feinteiligen anorganischen Füllstoffen auf der Basis von Estern der (Meth)acrylsäure unter Verwendung von Organosiliciumverbindungen als Haftvermittler, wobei die entstehende thixotrope Suspension durch Stehenlassen oder durch kurzfristiges Erwärmen in eine voll entflockte dünnflüssige Suspension überführt wird.
In EP-PS 0 214 551 (= US-PS 4 826 901) werden härtbare Gießharze auf Basis von fließfähigen, härtbaren Polymervorstufen mit einem Gehalt an feinteiligen anorganischen Füllstoffen von 20 bis 80 Gew.-% und einer polymerisationsfähigen Organosiliciumverbindung als Haftvermittler beschrieben, wobei die aus den organischen Bestandteilen gebildete, flüssige Phase Lecitin in Anteilen zwischen 0,01 und 5 Gew.-% enthält.
DE-PS 20 06 197 betrifft feuerbeständige, schlagfeste Formkörper, die durch Polymerisation von Methylmethacrylat oder Mischpolymerisation von Methylmethacrylat mit α,β-ethylenisch ungesättigten Verbindungen, wobei das Mischpolymer mehr als 50 Gew.-% Methylmethacrylat enthält, in Gegenwart eines wasserlöslichen Katalysators, eines Füllstoffes auf der Basis von Aluminiumoxid und einer geringen Wassermenge erhalten werden, wobei die Formkörper 20 bis 85 Gew.-% Aluminiumoxidhydrat oder Aluminiumhydroxid enthalten.
Aluminiumhydroxid-gefüllte Gießharze auf Basis von Methacrylsäureestern gemäß EP-A 0 253 211 (= US-PS 4 771 095) weisen einen hohen Anteil an Aluminiumhydroxid bzw. Aluminiumoxidhydrat als Füllstoff auf, wobei die Gießharze ein Gemisch aus mindestens je einer Organosiliciumverbindung mit funktioneller Gruppe, einem Kieselsäureester und einer organischen Metallsäureverbindung enthalten. Solche Gießharze weisen im ungehärteten Zustand Viskositäten auf, die deutlich niedriger als die Viskositäten bekannter, analoger Gießharze ohne Zusatz des beanspruchten Gemisches sind.
Eine Reihe von japanischen Schutzrechten beschreibt Gießharze auf der Basis von Methylmethacrylat mit Aluminiumhydroxid als Füllstoff sowie gegebenenfalls Organosiliciumverbindungen als Haftvermittler:
Japan. Kokai Tokkyo Koho 78,115,768; JP 60,199,616; JP 61,141,653; JP 61,209202; JP 63,222,057, JP 63,221,151 und Jpn. Kokai Tokkyo Koho JP 01,14,188.
Den Formkörpern, die aus den zuvor genannten Gießharzen bestehen, wird ein marmorähnliches Aussehen und eine gute Brandfestigkeit zugeschrieben.
In EP-A 211 657 (= US-PS 4 734 452) werden härtbare Zuammensetzungen aus einer Monomermischung, bestehend aus einem aliphatischen, polyfunktionellen (Meth)acrylat und einer aromatischen Vinylverbindung, einem anorganischen Füllstoff, der einen maximalen Teilchendurchmesser von 5 µm besitzt, und einem katalytischen Anteil an Polymerisationsinitiator beschrieben. Als anorganische Füllstoffe werden bevorzugt hydratisierte Metalloxide, beispielsweise Aluminiumhydroxid, eingesetzt.

WO 89/05 310 beschreibt Formkörper, die durch Polymerisation eines stabilen, flüssigen Gemischs, bestehend aus einem Methylmethacrylat-Sirup, Aluminiumhydroxid-Füllstoffteilchen und einem Haftvermittler, hergestellt werden. Bevorzugte Formkörper sind hierbei Küchenspülen, die eine gute Heißwasser-Wechselbständigkeit aufweisen.
In DE-OS 38 26 183 werden flammwidrige bis nichtbrennbare, kunststoffmodifizierte Dispersionsputze und Kunststoff-Dispersionskleber beschrieben, die im wesentlichen aus 39 bis 57 Gew.-% plättchenförmigen Hydrargillits Al(OH)₃ bestehen, zusammengesetzt aus der Mischung einer Komponente mit mittlerem Korndurchmesser von 0,5 bis 40 µm und einer Komponente mit mittlerem Korndurchmesser zwischen 40 und 150 µm, sowie Kunststoff-Dispersionsfüller, die aus 63 bis 74 Gew.-% plättchenförmigen Hydrargillit bestehen, zusammengesetzt aus drei Komponenten mit verschiedenem mittleren Korndurchmesser.

In EP-A 0 039 085 wird vorgeschlagen, Füllstoffe von annähernd Kugelgestalt in polymerisierbaren organischen Flüssigkeiten zu dispergieren, wobei die Viskosität der Dispersion weniger als 5 Poise haben muß. An das Füllmaterial werden somit ganz spezielle Ansprüche gestellt.

BE-A 674610 betrifft sogenannte "Verstärkte Polymerisate", wobei in einer Polymermatrix anorganische Füllstoffe enthalten sind, die vor ihrem Einsatz mit Silanen behandelt wurden, um eine gute Einbettung in der Matrix zu erreichen. Die notwendige Vorbehandlung des Füllstoffes macht das Herstellvertahren insgesamt aufwendig.

### Aufgabe und Lösung

Bei der Herstellung von Suspensionen für flammfeste Gießharze, bestehend aus teilchenförmigen, anorganischen Füllstoffen, einer polymerisierbaren, organischen Flüssigkeit sowie gegebenenfalls einem polymeren Dispergiermittel und einem Bindemittel, kommt es auf hohe Gehalte an anorganischem Füllstoff in der Suspension an, bei gleichzeitig niedriger Viskosität sowie unter Vermeidung von Strukturviskosität und Sedimentation.
Die im Stand der Technik verwendeten großen Füllstoffteilchen (Teilchengrößen > 30 µm) lassen zwar hohe Füllstoffgehalte bei relativ niedriger Viskosität in der

Suspension zu, es resultiert jedoch eine starke Sedimentationsneigung des Füllstoffs und dadurch bedingt entstehen Inhomogenitäten in den Formkörpern, die mit diesen Gießharzen hergestellt werden. Diese durch Sedimentation hervorgerufenen Inhomogenitäten bedingen eine von der gewünschten Form der Gießlinge abweichende Deformierung, die sich beispielsweise bei der Herstellung von Gußplatten in einer deutlichen Durchbiegung äußert.
Verwendet man die im Stand der Technik beschriebenen kleinen Füllstoffteilchen (Teilchengrößen < 5 µm), können im allgemeinen Füllstoffanteile von mehr als 60 Gew.-% in der Suspension nicht mehr realisiert werden, ohne daß ein starker, für die Gießfähigkeit der Suspension prohibitiver Viskositätsanstieg und ein ausgeprägt strukturviskoses Verhalten resultieren. Dadurch bedingt können wiederum Inhomogenitäten in den Gießharz-Formkörpern auftreten, auch hervorgerufen durch Gaseinschlüsse (z.B. Luftblasen) in der Suspension, die auch durch Anlegen eines Vakuums nur sehr schwer zu entfernen sind.
Überraschenderweise wurde gefunden, daß zur Lösung der bestehenden Aufgabe folgende Gießharz-Suspensionen zur Herstellung von flammfesten Formkörpern besonders geeignet sind:
A) 40 bis 80 Gew.-% eines anorganischen Füllstoffs, der durch Mischen von mindestens zwei Füllstoffteilchen-Fraktionen unterschiedlicher mittlerer Teilchengröße hergestellt ist, wobei das Größenverhältnis der durchschnittlichen Teilchenrößen der großen und der kleinen Füllstoffteilchen zwischen 10 : 1 und 2 : 1 liegt und wobei das Gewichtsverhältnis der großen und der kleinen Füllstoffteilchen zwischen 4 : 1 und 1 : 4 liegt,
B) 60 bis 20 Gew.-% einer flüssigen, polymerisierbaren, organischen Vorstufe, die vorzugsweise Präpolymerisat enthält und
C) 0 bis 5 Gew.-Teilen bezogen auf die Summe von A und B einer polymerisierbaren Organosiliciumkomponente als Haftvermittler.

Die in DE-OS 38 26 183 beschriebenen Dispersionsputze, -kleber und -füller weisen Wasser als flüssige Phase auf, worin anorganische Füllstoffe, insbesondere das dort beschriebene Hydrargillit Al(OH)₃ ein Dispergierverhalten aufweisen, das sich völlig vom Dispergierverhalten von anorganischen Füllstoffen in flüssigen, polymerisierbaren, organischen Vorstufen für Gießharze unterscheidet.

### Die anorganischen Füllstoffe A)

Als Füllstoffe geeignet sind die einschlägig für Gießharze verwendeten anorganischen Materialien, wie beispielsweise Aluminiumoxide, Alkali- und/oder Erdalkalioxide, Siliciumdioxid und/oder Titandioxid in verschiedenen Modifikationen, Tone, Silikate, Oxide, Kohle, Metalle oder Metallegierungen, synthetische Materialien wie Keramik, Glasmehl, Porzellan, Schlacke oder feinverteiltes Siliciumdioxid, Quarze, Koalin, Talkum, Glimmer, Feldspat, Apatit, Baryte, Gips, Kreide, Kalkstein, Dolomit oder Gemische der vor- und nachstehend genannten Komponenten.
Bevorzugt verwendet werden anorganische Materialien, die beim Erhitzen flammhemmende, in der Regel gasförmige Substanzen, wie beispielsweise Wasser, Kohlendioxid oder Schwefeltrioxid abspalten. Darunter fallen beispielsweise anorganische Verbindungen mit Hydratwasser, Erdalkalihydroxide, Aluminiumhydroxide, Metallhydroxide, Carbonate, Hydrogencarbonate, Phosphate, Sulfide, Hyposulfide, Hypophosphate, Borsäurederivate und dergleichen. Besonders bevorzugt wird Aluminiumhydroxid und/oder Aluminiumoxid-Hydrat verwendet.
Zweckmäßig wird bei den anorganischen Füllstoffen eine mittlere Teilchengröße der Füllstoffteilchen von 100 µm (Durchmesser), vorzugsweise von 75 µm nicht überschritten.
Der Füllstoff stellt ein Gemisch aus mindestens 2 Komponenten dar, deren mittlere Durchschnitts-Teilchenrößen solchermaßen beschaffen sind, daß ein Größenverhältnis zwischen den mittleren Durchschnittsteilchenrößen der großen Füllstoffteilchen und denjenigen der kleinen Füllstoffteilchen zwischen 10 : 1 und 2 : 1, bevorzugt zwischen 6 : 1 und 4 : 1 vorliegt. Füllstoffteilchen mit einer Teilchengröße < 0,1 µm sollen dabei nicht mehr als 10 % des Volumens aller Füllstoffteilchen ausmachen. Die Teilchengröße wird gemäß den üblichen Verfahren bestimmt, wobei zur Teilchengrößenbestimmung die jeweils größten Abmessungen der Partikel herangezogen werden (vgl. beispielsweise B. Scarlett, Filtration & Separation, Seite 215, 1965). Das Mengenverhältnis zwischen großen und kleinen Füllstoffteilchen liegt im allgemeinen zwischen 4 : 1 und 1 : 4, bevorzugt zwischen 2 : 1 und 1 : 2, besonders bevorzugt bei 1 : 1.
Bevorzugt ist der anorganische Füllstoff so beschaffen, daß das ausgehärtete Gießharz einen elastischen Schermodul von wenigstens 5 GPa (GNm⁻²), bevorzugt von wenigstens 10 GPa (GNm⁻²) aufweist, wobei bei der Einstellung der mechanischen Eigenschaften die vorgesehene Anwendung der Gießharze im Auge zu behalten ist.

Der Füllstoffanteil an den Gießharzen der vorliegenden Erfindung beträgt mindestens 40 Gew.-%. Im allgemeinen wird ein Anteil von 80 Gew.-% nicht überschritten, wobei als Richtwert ein Füllgehalt der Gießharze von 50 bis 80 Gew.-% angegeben sei. Die Herstellung der Füllstoffe in den zweckmäßigen Teilchenrößen kann nach den bekannten Verfahren erfolgen, beispielsweise durch Brechen und Mahlen.

### Die polymerisierbare, organische Vorstufe B)

Als flüssige Polymervorstufe sind Monomere M bzw. Monomermischungen geeignet, wie in EP-PS 218 866 beschrieben. Die Monomeren M, die vorzugsweise ein oder mehrere Praepolymerisate PM enthalten, werden vorzugsweise radikalisch unter Bildung eines bei Raumtemperatur festen Polymerisats polymerisiert. In dieser Hinsicht schließt sich die vorliegende Erfindung an die Lehre des Standes der Technik (z.B. DE-PS 24 49 656, EP-PS 0 214 551 oder EP-PS 0 218 866) an, wobei die flüssigen Polymervorstufen eine Viskosität von weniger als 5 Pa • s, vorzugsweise von weniger als 0,5 Pa • s bei der zur Formgebung vorgesehenen Temperatur aufweisen.
Als Monomere M seien vinylische Monomere oder Vinyliden-Monomere genannt (vgl. Ullmanns Enzyklopädie der Technischen Chemie, 3. Aufl., Bd. 14, Seiten 108 bis 110, Urban & Schwarzenberg, 1963), wie beispielsweise Vinylester und -ether, sowie Vinylverbindungen, vinylische Carbonylverbindungen, Vinylaromaten, heterocyclische Vinylverbindungen, makromonomere Verbindungen wie beispielsweise ungesättigte Polyester oder Polyurethane sowie insbesondere Derivate der Acryl- und der Methacrylsäure. Bevorzugt eingesetzt werden Monomere der Formel I: 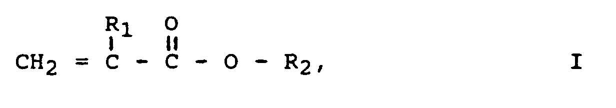 worin R₁ für Wasserstoff oder Methyl, R₂ für einen gegebenenfalls verzweigten und gegebenenfalls substituierten Alkylrest mit 1 bis 18 Kohlenstoffatomen, für einen gegebenenfalls substituierten Cycloalkylrest mit 5 bis 12 Kohlenstoffatomen oder für einen gegebenenfalls substituierten Arylrest mit 6 bis 10 Kohlenstoffatomen steht. Die an sich bekannten Substituenten sind beispielsweise Halogen, Hydroxy, Alkoxy, Dialkylaminosubstituenten mit C1-C12-Alkylresten, vorzugsweise mit C1-C6-Alkylresten.
Insbesondere seien als Monomere M Verbindungen der Formel I genannt, worin R₂ für Alkylreste mit 1 bis 8 Kohlenstoffatomen steht, wie beispielsweise Ethyl(meth)acrylat, Propyl(meth)acrylat, Butyl(meth)acrylat bzw. Isomere, 2-Ethylhexyl(meth)acrylat, Cyclohexyl(meth)acrylat, Phenyl(meth)acrylat, Benzyl(meth)acrylat, sowie speziell Methylmethacrylat.
Ferner können die Polymervorstufen noch an sich bekannte vernetzende Monomere enthalten, beispielsweise solche mit mindestens zwei polymerisationsfähigen Vinylgruppen im Molekül (vgl. H. Rauch-Puntigam, Th. Völker, "Acryl- und Methacrylverbindungen", Seite 184, Springer-Verlag, 1967), wobei exemplarisch Ethylenglykoldimethacrylat, 1,4-Butandioldimethacrylat, Triglykoldimethacrylat, Trimethylolpropantrimethacrylat, Allylverbindungen wie Allylmethacrylat oder Triallylcyanurat genannt seien. Der Gehalt an vernetzenden Monomeren liegt im allgemeinen bei 0,01 bis 10 Gew.-%, vorzugsweise bei 0,1 bis 5 Gew.-% bezogen auf die flüssigen Polymervorstufen.
Vorzugsweise enthalten die Polymervorstufen einen Gehalt von über 50 Gew.-%, speziell von 80 bis 100 Gew.-% an Methylmethacrylat. Als Comonomere können weitere mit den Methacrylestern der Formel I copolymerisierbare Monomere verwendet werden, wie beispielsweise die schon genannten Vinylaromaten und heterocyclischen Vinylverbindungen, so z.B. Styrol, ringsubstituierte Styrole, α-Methylstyrol, Divinylbenzol, Vinylpyrrolidon oder Vinylpyridin, Acrylnitril und Methacrylnitril, Vinylester wie Vinylacetat oder Vinylpropionat, Vinylchlorid oder Vinylidenchlorid. Im allgemeinen überwiegt der gleichmäßige Anteil der (Meth)acrylsäureester der Formel I und der vernetzenden Monomeren (> 50 Gew.-%), der vorteilhaft bis 100 Gew.-% der Polymervorstufe ausmachen kann. Besonders günstig ist ein Gemisch aus dem Monomeren Methylmethacrylat und einem vernetzenden Monomeren, wie beispielsweise Glykoldimethacrylat, wobei das Gewichtsverhältnis vorteilhaft zwischen 95 : 5 und 99,9 : 0,1 liegt.
Vorzugsweise enthält die flüssige, organische, polymerisiserbare Vorstufe Praepolymerisate PM, die im allgemeinen aus denselben Monomeren M wie die polymerisierbare Vorstufe aufgebaut sind, wobei die Praepolymerisate PM jedoch keine funktionalisierten Monomere enthalten. Im allgemeinen gelten die selben Proportionen wie für die Monomeren M angegeben. Die monomeren Bestandteile der Praepolymerisate PM können identisch sein mit den Monomeren M oder auch von diesen verschieden. Vorzugsweise sind die Praepolymerisate PM in den Monomeren M gelöst, sie können aber auch darin dispergiert sein. In der Regel haben die Praepolymerisate PM mittlere Molekulargewichte Mw im Bereich zwischen 2 x 10⁴ und 4 x 10⁵ Dalton (Bestimmung durch Gelpermeationschromatographie, vgl. hierzug: H.F. Mark et al., Encyclopedia of Polymer Science and Technology, Vol. 10, Seiten 1 bis 19, J. Wiley, 1987). Der Anteil der löslichen Praepolymerisate PM an den flüssigen Polymervorstufen liegt im Bereich 0 bis 20 Gew.-%, vorzugsweise 0 bis 10 Gew.-%.

Beispielsweise kann das Praepolymerisat PM ein Copolymerisat aus Methylmethacrylat und Methylacrylat im Gewichtsverhältnis 9 : 1 mit einem mittleren Molekulargewicht Mw von etwa 2,5 x 10⁵ Dalton sein.

### Die polymerisierbare Organosiliciumkomponente C)

Die Organosiliciumkomponente dient in an sich bekannter Weise als Haftvermittler zwischen Füllstoff und organischer Phase des Gießharzes, wobei die aus dem Stand der Technik bekannten Organosiliciumverbindungen Verwendung finden. In erster Linie handelt es sich um funktionelle Organosiliciumverbindungen mit mindestens einer ethylenisch ungesättigten Gruppe im Molekül. Der die ethylenisch ungesättigte Gruppe tragende funktionelle Rest ist im allgemeinen über ein Kohlenstoffatom mit dem zentralen Siliciumatom verknüpft. Die verbleibenden Liganden am Silicium sind in der Regel Alkoxyreste mit 1 bis 6 Kohlenstoffatomen, wobei sich noch Etherbrücken im Alkylrest befinden können. Genannt seien Trialkoxysilane, wie Vinyltrialkoxysilane oder Organosiliciumverbindungen, bei denen die CC-Doppelbindung über ein oder mehrere Kohlenstoffatome mit dem Si-Atom verbunden sind, wie Allyltrialkoxysilane oder γ-Methacryloyloxypropyltriaalkoxysilane. Weiterhin können Dialkoxysilane verwendet werden, wobei am Si-Atom ein weiterer funktioneller Rest mit einer CC-Doppelbindung, meist des gleichen Typs, oder ein Alkylrest mit vorzugsweise 1 bis 6 Kohlenstoffatomen gebunden ist. Als Organosiliciumkomponenten können beispielsweise dienen: Vinyltrimethoxysilan, Vinyltriethoxysilan, Vinyltriacetoxysilan, Vinyltris(methoxyethoxy)silan, Divinyldimethoxysilan, Vinylmethyldimethoxysilan, Vinyltrichlorsilan, γ-Methacryloyloxypropyltrimethoxysilan, γ-Methacryloyloxypropyltris(methoxyethoxy)silan oder Gemische der vorstehend genannten Komponenten. Vorteilhafterweise werden die Organosiliciumverbindungen zusammen mit Katalysatoren vom Amintyp, insbesondere vom Typ der Alkylamine mit 3 bis 6 Kohlenstoffatomen, speziell mit n-Butylamin verwendet. Der Aminkatalysator wird im allgemeinen in Mengen von 0,5 bis 10 Gew.-%, vorzugsweise 1 bis 5 Gew.-% bezogen auf die Organosiliciumverbindung eingesetzt. Im allgemeinen beträgt das Gewichtsverhältnis von anorganischem Füllstoff A) zur Organosiliciumverbindungen C) zwischen 500 : 1 bis 20 : 1, vorzugsweise (50 ± 25) : 1.

### Die Herstellung der Gießharz-Suspensionen

Zweckmäßigerweise geht man bei der Herstellung der Gießharz-Suspensionen von der flüssigen Polymervorstufe B) aus, welche die Monomeren M, die Praepolymerisate PM sowie gegebenenfalls die Organosiliciumkomponente C) enthält und welche die organische Phase bildet.
In die organische Phase wird nun mit Hilfe mechanischer Dissolver der anorganische Füllstoff A) eingetragen, wobei die Füllstoffteilchen-Fraktionen einzeln zugegeben werden können, wobei die Reihenfolge der Zugabe der Füllstoffteilchen unterschiedlicher Größe nicht festgelegt ist. Der Vorgang ist in der Regel nach 10 Minuten abgeschlossen. Danach wird die Suspension über einen Zeitraum von 10 Minuten am Dissolver dispergiert, wobei die Umlaufgeschwindigkeit des Dissolvers 10 bis 20 Meter pro Sekunde beträgt. Im allgemeinen werden die anorganischen Füllstoffe A) der organischen Phase B) solchermaßen zugegeben, daß die Viskosität nicht über einen Wert von 10 Pa s steigt.
Die gegebenenfalls eingesetzten Organosiliciumverbindungen C) werden der organischen Phase B) vor Zugabe der Füllstoffe zugegeben. Alternativ hierzu kann der Füllstoff A) vor Zugabe zur organischen Phase B) silanisiert werden, beispielsweise durch Trockensilanisierung.
Anschließend löst man die Polymerisationshilfsmittel, wie an sich bekannte Polymerisationsinitiatoren in Mengen von 0,1 bis 5 Gew.-% bezogen auf die Monomeren M. Als Polymerisationsinitiatoren werden Radikalbildner eingesetzt, deren Zerfall in Radikale thermisch oder durch Redox-Prozesse induziert werden kann. Grundsätzlich sind alle diejenigen geeignet, die bereits bei tiefen Temperaturen einen hohen Radikalstrom liefern (vgl. J. Brandrup, E.H. Immergut, "Polmyer Handbook" 3rd Ed., Kapitel III, Seiten 1 bis 65, J. Wiley, 1989). Zweckmäßigerweise erfolgt der Zusatz der Initiatoren erst kurz vor dem Verfüllen und Aushärten der Gießharz-Suspensionen.

Den erfindungsgemäßen Gießharz-Suspensionen können zusätzlich zu den feinteiligen, anorganischen Füllstoffen noch Verstärkerstoffe, wie beispielsweise Faserstoffe, zugesetzt werden. Zu den geeigneten Faserstoffen gehören beispielsweise Glasfasern, Mineralfasern oder Steinfasern.

Der Anteil dieser Verstärkerstoffe liegt im allgemeinen unterhalb des Gehaltes an den feinteiligen, anorganischen Füllstoffen.
Um farbige Formteile herstellen zu können, kann man der organischen Phase A) auch Pigmente und/oder Farbstoffe zusetzen. Als Beispiele seien Eisenoxid, Titandioxid, Zinkweiß, Ultramarinblau und Ruß genannt. Pigmente können auch als vorgebildete Dispersionen in die organische Phase A) mit Hilfe geeigneter Pigment-Dispergiermittel eingebracht werden.
Gegebenenfalls ist es von Vorteil, wenn die Gießharz-Suspension innere und/oder äußere Trennmittel enthält, die das Anhaften des gehärteten Gießharzes an der Form verhindern und eine gute Oberflächenbeschaffenheit der Gießharz-Formteile bewirken. Beispiele für innere Trennmittel sind Alkali- und Erdalkalisalze von Fettsäuren und Alkylphosphate sowie deren neutralisierte Derivate. Zu geeigneten äußeren Formtrennmitteln gehören auf den Formen befindliche Überzüge, beispielsweise aus Polytetrafluorethylen, Polyorganosiloxan oder Polyvinylalkohol .

### Herstellung der Gießharz-Formkörper

Die mit dem Polymerisationsinitiator versetzte, erfindungsgemäße Gießharz-Suspension läßt sich beispielsweise sehr gut in die üblichen Gießformen vergießen. Vorteilhafterweise wird die Suspension vor dem Verfüllen evakuiert. Die Härtung (= Polymerisation der organischen Phase B)) erfolgt vorzugsweise thermisch, beispielsweise durch Erhitzen auf 50 bis 80 Grad C während 20 bis 60 min, wobei die Härtung unter Anwendung von Druck wie auch ohne Druck verlaufen kann.
Mit Hilfe der erfindungsgemäßen Gießharz-Suspensionen lassen sich die vielfältigsten Formen füllen und eine technisch einwandfreie Polymerisation durchführen. Auf diese Weise können Platten, Schüsseln, Waschbecken, Spülbekken, WC-Becken, Formkörper für Bauindustrie, Maschinenfundamente, und Behälter hergestellt werden.
Eine weitere vorteilhafte Ausgestaltung der Erfindung ist die kontinuierliche Plattenherstellung auf einem Förderband. Dabei wird die mit einem geeigneten Polymerisationsinitiator versetzte Gießharz-Suspension auf ein laufendes Förderband mit seitlichen Begrenzungen aufgebracht, wobei sie sich aufgrund ihrer niedrigen Viskosität und ihrer geringen Sturkturviskosität schnell verteilt und nivelliert. Danach wird die Oberfläche der Suspension mit einem zweiten Metallband abgedeckt. Die Härtung der Suspension kann thermisch entweder durch Heizen der beiden Metallbänder erfolgen oder bei Verwendung geeigneter Redox-Initiatoren auch ohne Fremdheizung durchgeführt werden.
Die Restomonomerengehalte der gehärteten Gießharze liegen unterhalb 1 Gew.-% bezogen auf den Gesamtmonomerenanteil, bevorzugt unter 0,5 Gew.-%.

### Vorteilhafte Wirkungen der Erfindung

Die erfindungsgemäßen Gießharz-Suspensionen lassen sich sehr gut in die üblichen Gießformen vergießen. Damit wird eine große Formenvielfalt, insbesondere komplizierte Formen, zugänglich, wobei eine einwandfreie und vollständige Polymerisation gewährleistet ist.
Bei der Verarbeitung der Gießharz-Suspensionen gemäß der vorliegenden Erfindung ist die geringe Viskosität bei nur geringer Neigung zur Strukturviskosität und Sedimentation hervorzuheben.
Die Formkörper, die mit o.g. Gießharz-Suspensionen zugänglich werden, können mit geringem Energie- und Personalaufwand bei gleichzeitiger hoher Formtreue und geringen Nacharbeitungszeiten hergestellt werden.
Hervorzuheben sind die tadellose Oberfläche, sowie die hohe Steifigkeit, die Festigkeit und die ausgezeichnete Flammfestigkeit der Formkörper.
Überraschenderweise weisen Formkörper, die mit den erfindungsgemäßen Gießharzsuspensionen hergestellt wurden, eine ähnlich hohe Transluzenz wie Gießharze auf, die ausschließlich große, stark zur Sedimentation neigende Füllstoffteilchen enthalten.
Die folgenden Beispiele dienen zur Erläuterung der Erfindung.

### BEISPIELE

### Beispiel 1

In 296,99 g MMA und 0,01 g 2,4-Dimethyl-6-tert-butylphenol werden 30 g Plexigum M920 ® bei ca. 50 Grad C innerhalb 5 Stunden gelöst und danach auf Zimmertemperatur abgekühlt. In diesem Sirup werden 5,0 g Stearinsäure und 3,0 g Glykoldimethacrylat gelöst. Am Dissolver werden unter mäßigem Rühren 332,5 g ALCOA ® C33 (Aluminiumhydroxid mit einer mittleren Teilchengröße von 45 µm) und danach 332,5 g ALCOA ® C333 (Aluminiumhydroxid mit einer mittleren Teilchengröße von 8 µm) in den Sirup eingetragen. Danach wird die Suspension mit dem Dissolver mit 12,5 m/sec ca. 10 Minuten dispergiert.
In der Suspension werden am Flügelrührer 5 g Bis-(4-tert-butylcyclohexyl)-peroxidicarbonat und 1 g 2,2'-Azobis-(isobutyronitril) gelöst und die eingeschlossenen Luftbläschen unter Anlegen eines Vakuums innerhalb sehr kurzer Zeit aus der Suspension entfernt.
Aus zwei hochglanzpolierten und verchromten Metallplatten (Dicke 4 mm) wird mit Hilfe einer runden PVC-Schnur (Durchmesser 4,2 mm) eine Kammer gebaut.
In den Zwischenraum der Metallkammer wird die Suspension eingegossen und die Kammer verschlossen.
Die gefüllte Kammer wird in ein Wasserbad von 65 Grad C eingelegt. Die Polymerisationszeit beträgt 20 Minuten.
Anschließend wird in einem Trockenschrank 30 Minuten bei 105 Grad C endpolymerisiert. Danach wird die Kammer entformt und der ausgehärtete Gießling entnommen. Der Plattengießling hat beidseitig hochglänzende Oberflächen, ist nicht durchgebogen und zeigt eine hohe Transluzenz.

### Vergleichsbeispiel A

In einen Sirup gemäß Beispiel 1 werden 665 g ALCOA ® C33 eingebracht und mit einem Dissolver dispergiert. Nach Zugabe des Initiators lassen sich die eingeschlossenen Luftbläschen durch Anlegen eines Vakuums innerhalb sehr kurzer Zeit aus der Suspension entfernen. Danach wird wie in Beispiel 1 eine Platte hergestellt.
Der Plattengießling ist auf der Oberseite hochglänzend, zeigt aber auf der Unterseite, bedingt durch Füllstoffsedimentation, sehr viele matte Stellen. Der Plattengießling ist nach der Oberseite hin deutlich durchgebogen. Die Durchbiegung wird durch einen unterschiedlichen Polymerisationsschrumpf von Ober- und Unterseite, bedingt durch die Füllstoffanreicherung auf der Unterseite, hervorgerufen.
Der Plattengießling zeigt eine sehr hohe Transluzenz.

### Vergleichsbeispiel B

Wie in Vergleichsbeispiel A wird mit 665 g ALCOA ® C333 anstelle von ALCOA ® C33 eine Suspension hergestellt. Unter Anlegen eines Vakuums lassen sich die eingeschlossenen Luftbläschen nur sehr schwer aus der Suspension entfernen.
Die Suspension schäumt stark auf. Mit der Suspension wird wie in Vergleichsbeispiel A ein Plattengießling hergestellt. Die Platte hat beidseitig hochglänzende Oberflächen, ist nicht durchgebogen und zeigt nur sehr wenig Transluzenz.

### Beispiel 2

Eigenschaftsvergleich der Gießharz-Suspensionen und der daraus hergestellten Platten

| Gießharzsuspension | Beispiel 1 | A | B |
|---|---|---|---|
| Sedimentation | keine | ausgeprägt | keine |
| Sturkturviskosität | keine | keine | ausgeprägt |
| Größenverteilung (TGV) der Aluminiumhydroxid-Teilchen | bimodal | monomodal | monomodal |
| mittlerer Teilchendurchmesser | 8 und 45 µm | 45 µm | 8 µm |

| Formkörper nach | Beispiel 1 | A | B |
|---|---|---|---|
| Biegfestigkeit (MPa) nach DIN 53452 (Unterseite auf Zug) | 48 | 35 | 52 |
| Transluzenz | groß | groß | gering |

## Patentansprüche

1. Gießharz-Suspensionen bestehend aus:
A) 40 bis 80 Gew.-% eines anorganischen Füllstoffs,
B) 60 bis 20 Gew.-% einer flüssigen,
polymerisierbaren organischen Vorstufe, enthaltend ein oder mehrere Monomere und gegebenenfalls ein Präpolymerisat und
C) 0 bis 5 Gew.-Teile bezogen auf die Summe von A) und B) einer polymerisierbaren Organosilicium-Verbindung als Haftvermittler zwischen anorganischem Füllstoff A und organischer Vorstufe B,
**dadurch gekennzeichnet, daß** der anorganische Füllstoff A) ein Gemisch aus mindestens zwei Füllstoffteilchen-Fraktionen unterschiedlicher mittlerer Teilchengröße ist, wobei das Größenverhältnis der durchschnittlichen Teilchengrößen der großen und der kleinen Füllstoffteilchen zwischen 10 : 1 und 2 : 1 liegt und wobei das Gewichtsverhältnis der Anteile der großen und der kleinen Füllstoffteilchen zwischen 4 : 1 und 1 : 4 liegt.

2. Gießharz-Suspensionen gemäß Anspruch, **dadurch gekennzeichnet, daß** das Größenverhältnis der durchschnittlichen Teilchengrößen der beiden Füllstoffteilchen-Fraktionen zwischen 6 : 1 und 4 : 1 und das Gewichtsverhältnis zwischen 2 : 1 und 1 : 2 liegt.

3. Gießharz-Suspensionen gemäß den Ansprüchen 1 und 2, **dadurch gekennzeichnet, daß** die Füllstoffteilchen aus Aluminiumhydroxid und/oder Aluminiumoxidhydrat augebaut sind.

4. Gießharz-Suspensionen gemäß den Ansprüchen 1 bis 3, **dadurch gekennzeichnet, daß** die Komponente B) zwischen 0 und 20 Gew.-% eines in B) löslichen Präpolymerisats enthält, wobei die Viskosität der Komponente B) von weniger als 5 Pa.s aufweist.

5. Gießharz-Suspensionen gemäß den Ansprüchen 1 bis 4, **dadurch gekennzeichnet, daß** die Komponente B) von über 50 Gew.-% aus Methylmethacrylat besteht.

6. Gießharz-Suspensionen gemäß den Ansprüchen 1 bis 5, **dadurch gekennzeichnet, daß** die Komponente B) 0,01 bis 10 Gew.-% einer vernetzbaren Monomerverbindung enthält.

7. Gießharz-Suspensionen gemäß den Ansprüchen 1 bis 6, **dadurch gekennzeichnet, daß** die Komponente B) 0,1 bis 5 Gew.-% einer vernetzenden Monomerverbindung enthält.

8. Flammfeste Formkörper aus Gießharz-Suspensionen gemäß den Ansprüchen 1 bis 7.

## Claims

1. Casting resin suspensions comprising:
A) 40 to 80% by weight of an inorganic filler;
B) 60 to 20% by weight of a fluid polymerisable organic precursor, containing one or more monomers and optionally a prepolymer and
c) 0 to 5% by weight, based on the sum of A) and B) of a polymerisable organosilicon compound as an adhesive between inorganic filler A and organic precursor B,
**characterised in that** the inorganic filler A) is a mixture of at least two filler particle fractions of different average particle size, wherein the size ratio of the average particle sizes of the large and the small filler particles is between 10:1 and 2:1, and where the weight ratio of the portions of the large and small filler particles is between 4:1 and 1:4.

2. Casting resin suspensions according to claim 1, **characterised in that** the size ratio of the average particle sizes of the two filler particle fractions is between 6:1 and 4:1 and that the weight ratio is between 2:1 and 1:2.

3. Casting resin suspensions according to claims 1 and 2, **characterised in that** the filler particles comprise aluminium hydroxide and/or aluminium oxide hydrate.

4. Casting resin suspensions according to claims 1 to 3, **characterised in that** the component B) contains between 0 and 20% by weight of a prepolymer soluble in B), wherein the viscosity of component B) is less than 5 Pa.s.

5. Casting resin suspensions according to claims 1 to 4, **characterised in that** the component B) comprises over 50% by weight methylmethacrylate.

6. Casting resin suspensions according to claims 1 to 5, **characterised in that** the component B) contains 0.01 to 10% by weight of a cross-linkable monomer compound.

7. Casting resin suspensions according to claims 1 to 6, **characterised in that** the component B) contains 0.01 to 5% by weight of a cross-linkable monomer compound.

8. Flame-proof mouldings from casting resin suspensions according to claims 1 to 7.

## Revendications

1. Suspensions de résine de coulée consistant en :
A) de 40 à 80 % en poids d'une substance de charge minérale,
B) de 60 à 20 % en poids d'un précurseur organique polymérissable, contenant un ou plusieurs monomères et, le cas échéant, un prépolymérisat, et,
C) de 0 à 5 parties en poids rapporté à la somme de A) et B) d'un composé organosilicité polymérisable, en tant qu'agent adhésif entre la substance de charge minérale A et le précurseur organique B,
**caractérisées en ce que**
la substance de charge minérale A) est un mélange d'au moins deux fractions de particules de substance de charge de taille moyennes, différentes, de particules pour lesquelles le rapport des tailles moyennes des particules, entre les grandes particules et les petites particules de substance de charge, se situe entre 10:1 et 2:1 et pour lesquelles le rapport en poids des fractions des grandes et des petites particules de substance de charge, se situe entre 4:1 et 1:4.

2. Suspensions de résine de coulée conformément à la revendication 1,
**caractérisées en ce que**
le rapport de tailles des tailles moyennes des particules des deux fractions de particules de substances de charge, se situe entre 6:1 et 4:1 et le rapport en poids entre 2:1 et 1:2.

3. Suspensions de résine de coulée conformément aux revendications 1 et 2,
**caractérisées en ce que**
les particules de substances de charge sont constituées d'hydroxyde d'aluminium et/ou d'hydrate d'oxyde d'aluminium.

4. Suspensions de résine de coulée conformément aux revendications 1 à 3,
**caractérisées en ce que** le composant B) renferme entre 0 et 20 % en poids d'un prépolymérisat soluble dans B), pour lequel la viscosité du composant B) présente une valeur de moins de 5 Pa.s.

5. Suspensions de résine de coulée conformément aux revendications 1 à 4,
**caractérisées en ce que**
le composant B) consiste pour plus de 50 % en poids de méthacrylate de méthyle.

6. Suspensions de résine de coulée conformément aux revendications 1 à 5,
**caractérisées en ce que**
le composant B) contient de 0,01 à 10 % en poids d'un composé monomère réticulable.

7. Suspensions de résine de coulée conformément aux revendications 1 à 6,
**caractérisées en ce que**
le composant B) renferme de 0,01 à 5 % en poids d'un composé monomère réticulant.

8. Corps moulés résistants à l'inflammation en suspensions de résine de coulée conformément aux revendication 1 à 7.
